# EUROPÄISCHE PATENTSCHRIFT

(11) **EP 0 681 708 B1**
(45) Veröffentlichungstag und Bekanntmachung des Hinweises auf die Patenterteilung: **28.05.1997**
(21) Anmeldenummer: 94904128.9
(22) Anmeldetag: 04.01.1994
(51) Int. Cl.: G02B 6/38, H01R 13/518, H01R 13/631

(54) **Optische Verbinderanordnung**
Optical connector
Dispositif de connexion optique

(30) Priorität: 26.01.1993 DE 4302826
(43) Veröffentlichungstag der Anmeldung: 15.11.1995
(73) Patentinhaber: SIEMENS AKTIENGESELLSCHAFT, 80333 München (DE)
(72) Erfinder: BEIER, Axel, D-10439 Berlin (DE); WEIGEL, Hans-Dieter, D-10405 Berlin (DE)
(86) Internationale Anmeldenummer: DE9400013
(87) Internationale Veröffentlichungsnummer: WO9417433

(56) Entgegenhaltungen:
- EP-A- 0 123 590
- EP-A- 0 375 669
- EP-A- 0 567 809
- DE-U- 9 102 805
- US-A- 4 953 929

## Beschreibung

Aus dem deutschen Gebrauchsmuster G 91 02 805.1 ist ein aus zwei komplementären Teilen bestehender Halter bekannt, der zwei von einem Zwei-Kammer-Innenraum gebildete Aufnahmen hat. Das Innere jeder Kammer (Aufnahme) besitzt ein exakt konfiguriertes Profil, das der Konfiguration des festgelegten Außenprofils des jeweiligen Steckverbinder-Gehäuses entspricht. Die Steckverbinder-Gehäuse weisen keinerlei radiale Beweglichkeit zueinander und in bezug auf den Halter auf.

Aus der EP-A2-0 408 852 ist eine Verbinderanordnung mit einem Halter mit zwei Aufnahmen mit C-förmigem Querschnitt für je ein einzelnes optisches Steckverbinder-Gehäuse bekannt. Jede Aufnahme weist innenseitig als Haltemittel Erhebungen auf, die mit korrespondierenden Ausnehmungen in den Außenflächen der Steckverbinder-Gehäuse zusammenwirken, wobei die Steckverbinder-Gehäuse unbeweglich in den Aufnahmen gehalten werden. Um dennoch eine radiale Relativbewegung der Steckverbinder-Gehäuse zueinander zu ermöglichen, sind die Aufnahmen über ein nachgiebiges Element miteinander verbunden. Zur Gewährleistung (im Hinblick auf bestehende Normenentwürfe (z. B. ANSI X3T9)) ausreichender Radialbeweglichkeit bei genügender Gesamtsteifigkeit ist ein verhältnismäßig großer Raum zwischen den beiden Aufnahmen erforderlich; eine Halterung von Steckverbinder-Gehäusen mit rechteckigem Querschnitt in flacher Orientierung ist daher wegen der von bestehenden Normentwürfen geforderten Abständen der Steckverbinder-Gehäuse-Längsachsen (bzw. in den Gehäusen gehaltener Steckerstifte) problematisch. Die Handhabung der Verbinderanordnung beim Koppeln mit korrespondierenden Kopplungselementen ist schwierig, weil dazu der Halter im Bereich des nachgiebigen Elements gegriffen werden muß und dieses dabei unerwünscht zusammengedrückt und/oder die relative Radialbeweglichkeit der Aufnahmen verhindert wird.

Aus der EP-A2-0 567 809 (Patentanmeldung gemäß Art. 54(3) EPÜ) ist eine Anordnung mit einem Basisteil und einem darauf aufschiebbaren verrastbaren Deckel bekannt. Das Basisteil hat zwei starre Aufnahmen für je ein einzelnes Steckverbinder-Gehäuse. In die Aufnahmen hineinragende senkrechte Rippen bilden Haltemittel, die mit steckverbindergehäuseseitigen Nuten derart zusammenwirken, daß die Steckverbinder-Gehäuse mit relativem Spiel zueinander gehalten werden. Erst durch den Deckel sind die Gehäuse unverlierbar fixiert, wobei zumindest ein Teil der Gehäuse-Mantelflächen vollständig materialumgeben ist. Die bekannte Anordnung ist dadurch breiter (erfordert damit einen entsprechenden Einbauraum) als die durch den Abstand der äußeren, einander abgewandten Gehäuse-Seitenflächen vorgegebene Mindestbreite.

Die EP-A2-0 375 669 offenbart eine Verbinderanordnung, die zwei einzelne optische Faserendhülsen und einen Halter mit zwei starr miteinander verbundenen Aufnahmen umfaßt. Die Aufnahmen sind als geschlitzte hohlzylindrische Hülsen ausgebildet, in die von der Frontseite her je eine der Faserendhülsen einpreßbar ist. Die Faserendhülsen sind in einer relativ zueinander unveränderlichen Position fest in den Aufnahmen des Halters fixiert.

Die Aufgabe der Erfindung besteht daher in der Schaffung einer konstruktiv einfach aufgebauten Verbinderanordnung mit einzelnen relativer zueinander radial beweglichen Steckverbinder-Gehäusen, die beim Steckvorgang äußerst einfach handhabbar ist.

Erfindungsgemäß wird diese Aufgabe gelöst durch eine Verbinderanordnung enthaltend zwei einzelne optische Steckverbinder-Gehäuse und einen Halter mit zwei im wesentlichen starr miteinander verbundenen Aufnahmen mit jeweils einem im wesentlichen C-förmigen Querschnitt für je eines der Steck-verbinder-Gehäuse, wobei die Aufnahmen innenseitig jeweils Haltemittel zur Zusammenwirkung mit komplementären Haltemitteln der Steckverbinder-Gehäuse aufweisen, wobei zumindest eine Aufnahme innenseitig und deren Haltemittel in bezug auf die Außenabmessung des jeweiligen Steckverbinder-Gehäuses und dessen komplementäre Haltemittel so bemessen sind, daß dieses Gehäuse in dieser Aufnahme in wenigstens einer zu seiner Längsachse radialen Richtung beweglich haltbar ist, und wobei die Schenkel des C-förmigen Querschnitts derart elastisch verformbar sind, daß sie beim Einbringen des jeweiligen Steckverbinder-Gehäuses auffedern und bei vollständig eingebrachtem Gehäuse zurückfedern, so daß die komplementären Haltemittel in Zusammenwirkung kommen. Erfindungsgemäß wird die Radialbeweglichkeit der Steckverbinder-Gehäuse relativ zueinander durch die bewegliche Lagerung in der oder den Aufnahme(n) ermöglicht, wobei die Aufnahmen starr - also ohne Zwischenordnung eines nachgiebigen Elementes - miteinander verbunden sind. Die zur Herstellung des Halters erforderlichen Werkzeuge sind aufgrund der einfachen Geometrie des Halters vergleichsweise einfach. Ein weiterer Vorteil besteht in einem geringen Platzbedarf, wobei auch eine ausreichende Radialbeweglichkeit von Steckverbinder-Gehäusen mit einem rechteckigen Querschnitt in flacher Orientierung gewährleistet ist. Die bewegliche Lagerung des Steckverbinder-Gehäuses in der Aufnahme gewährleistet auch beim Festhalten und manuellen Greifen (z. B. beim Einstecken) der Anordnung eine Relativbeweglichkeit der Steckverbinder-Gehäuse. Die freien Schenkel des C-förmigen Querschnitts sind elastisch verformbar, so daß die Steckverbinder-Gehäuse - und ggf. damit verbundene Lichtwellenleiterkabel - leicht durch die offenbleibende Seite in die Aufnahmen bzw. aus diesen einführbar bzw. entnehmbar sind.

Eine konstruktiv besonders bevorzugte Fortbildung der Erfindung sieht vor, daß die Haltemittel mindestens eine Erhebung und/oder eine Ausnehmung umfassen, die mit korrespondierenden Ausnehmungen und/oder Erhebungen an der Außenfläche des Steckverbinder-Gehäuses zusammenwirken. Bevorzugt können innenseitig in den Aufnahmen angeordnete Erhebungen in Ausnehmungen eingreifen, die in den Außenflächen handelsüblicher Simplex-Steckverbinder-Gehäuse (z. B. des von Nippon Telegraph und Telephone International Corp., Tokjo, Japan unter der Bezeichnung SC-01 erhältlichen Steckverbinders) einfach einzubringen sind. Die Erhebungen sind dann zumindest in der einen radialen Richtung derart kleiner als die korrespondierenden Ausnehmungen bemessen, daß eine Beweglichkeit des Steckverbinder-Gehäuses in der einen radialen Richtung möglich ist.

Die Steckverbinder-Gehäuse lassen sich besonders leicht und beschädigungsunanfällig in die Aufnahmen einführen, wenn die Erhebungen der Aufnahmen eine der offenen Seite zugewandte schräge Fläche haben.

Die Radialbewegung der Steckverbinder-Gehäuse in Richtung auf die offene Seite läßt sich konstruktiv besonders einfach dadurch begrenzen, daß zumindest eine Erhebung der Aufnahme eine der offenen Seite abgewandte Anschlagfläche für eine Begrenzungsfläche der korrespondierenden Ausnehmung aufweist.

Eine weitere konstruktiv besonders vorteilhafte Ausgestaltung der Erfindung sieht vor, daß die Aufnahmen annähernd spiegelsymmetrisch um einen gemeinsamen Mittelsteg ausgebildet sind und daß der Mittelsteg einen Anschlag zur Begrenzung der jeweiligen Radialbewegung der Steckverbinder-Gehäuse bildet.

Die relative Beweglichkeit der Steckverbinder-Gehäuse zueinander in einer zu den Längsachsen der Steckverbinder-Gehäuse senkrechten Ebene wird vorteilhafterweise dadurch erhöht, daß zumindest die eine Aufnahme in einer weiteren radialen Richtung um einen auf die Höhe der jeweiligen Erhebung abgestimmten Betrag größer als die entsprechende Außenabmessung des Steckverbinder-Gehäuses bemessen ist.

Um den Steckverbinder-Gehäusen auch eine Beweglichkeit in axialer Richtung zu verleihen, sieht eine vorteilhafte Weiterbildung der Erfindung vor, daß die Ausnehmungen in Richtung der Längsachsen der Steckverbinder-Gehäuse größer als die korrespondierenden Erhebungen bemessen sind.

Die Aufnahmen umgeben die Steckverbinder-Gehäuse vorzugsweise jeweils nur an einem Teil der jeweiligen Umfangsfläche. Die Steckverbinder-Gehäuse können zur Kopplung mit komplementären Steckverbindern geeignete Steckverbinder (Steckerstifte) enthalten; sie können auch zur Kopplung mit optoelektronischen Bauelementen ausgebildet sein.

Ein Ausführungsbeispiel der Erfindung wird nachfolgend anhand einer Zeichnung näher erläutert; es zeigen:
Figur 1 schematisch zwei einzelne Steckverbinder-Gehäuse vor ihrer Einbringung in einen Halter,
Figur 2 eine Draufsicht auf den Halter mit andeutungsweise gezeigten Steckverbinder-Gehäusen,
Figur 3 einen Teilschnitt entlang der Linie III-III in Figur 2,
Figur 4 eine Seitenansicht des Halters,
Figur 5 einen Schnitt gemäß Linie V-V in Figur 4 und
Figur 6 einen vergrößerten Ausschnitt aus Figur 5.

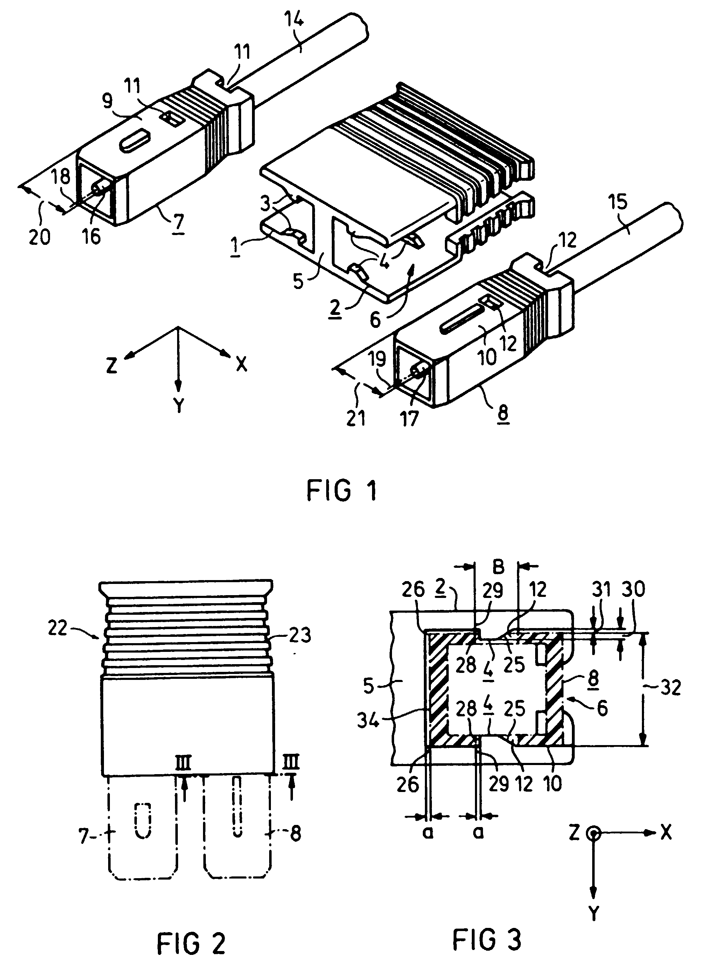

Die in Figur 1 gezeigte Anordnung umfaßt einen Halter mit zwei Aufnahmen 1, 2, die innenseitig jeweils mehrere Erhebungen 3, 4 aufweisen. Die Aufnahmen 1, 2 haben einen im wesentlichen C-förmigen Querschnitt mit jeweils einer offenen Seite (Figur 1 zeigt vollständig nur die offene Seite 6 der Aufnahme 2) und sind in annähernd spiegelsymmetrischer Anordnung über einen gemeinsamen Mittelsteg 5 (der die Mitte Jedes C bildet) starr miteinander verbunden. In jede Aufnahme 1, 2 ist je ein einzelnes optisches Steckverbinder-Gehäuse 7, 8 einbringbar. Die Erhebungen 3, 4 greifen in an den Außenflächen 9, 10 der Gehäuse 7, 8 vorgesehene Ausnehmungen 11, 12 ein und halten die Gehäuse 7, 8 wie nachfolgend erläutert beweglich in den Aufnahmen. In die Gehäuse 7, 8 treten rückwärtig Lichtwellenleiterkabel 14, 15 ein, in denen zumindest ein Lichtwellenleiter geführt ist. Die Lichtwellenleiter enden mit ihren kopplungsfähigen Stirnflächen jeweils an der Stirnfläche eines andeutungsweise dargestellten Steckerstiftes 16, 17. Die Längsachse des Steckerstiftes 16, 17 fällt mit der jeweiligen Gehäuse-Längsachse 18, 19 zusammen, deren Orientierung in Figur 1 mit Z angegeben ist; in einer dazu senkrechten Ebene erstrecken sich zu den Gehäuse-Längsachsen 18, 19 radiale, orthogonale Richtungen X und Y. Die Aufnahmen 1, 2 sind in zumindest einer radialen Richtung X größer als die entsprechende Abmessung 20, 21 der Gehäuse 8, 9 bemessen. Die Erhebungen 3, 4 sind in ihren Abmessungen zumindest in radialer Richtung X derart kleiner in bezug auf die entsprechenden Abmessungen der korrespondierenden Ausnehmungen 11, 12 bemessen, daß die Gehäuse 7, 8 zumindest in der einen radialen Richtung X beweglich gehalten sind.

Figur 2 zeigt, daß der Halter die andeutungsweise dargestellten Steckverbinder-Gehäuse 7, 8 nur teilweise im rückwärtigen Bereich 22 umgibt. Zur weiteren Erleichterung der Handhabbarkeit weist der Halter Griffrillen 23 auf.

Figur 3 zeigt eine stirnseitige teilweise Ansicht des Halters in gegenüber der Figur 2 vergrößerter Darstellung, wobei nur das Steckverbinder-Gehäuse 8 als Schnitt im Bereich der Erhebungen 4 andeutungsweise dargestellt ist. Die Erhebungen 4 haben je eine der offenen Seite 6 zugewandte Schräge 25, die beim Einführen des Gehäuses 8 zunächst mit Kanten 26 des Gehäuses in Kontakt kommen; dadurch werden die Schenkel der Aufnahme 2 auseinanderbewegt. Wenn das Gehäuse 8 soweit in die Aufnahme 2 eingeschoben ist, daß die Ausnehmungen 12 an den Gehäuse-Außenflächen 10 den Erhebungen 4 gegenüberliegen, rasten die Erhebungen in die Ausnehmungen 12 ein und halten das Gehäuse 8 in der Aufnahme 2 fest. Die Erhebungen 4 weisen der offenen Seite 6 abgewandte Anschlagflächen 28 auf, die jeweils mit einer Begrenzungsfläche 29 der jeweils korrespondierenden Ausnehmung 12 zusammenwirken und die Bewegung des Gehäuses 8 zur offenen Seite 6 hin begrenzen; die Bewegung des Gehäuses 8 in entgegengesetzter Orientierung wird durch den gemeinsamen Mittelsteg 5 begrenzt, der eine Anschlagfläche für eine seitliche Begrenzungsfläche 34 des Gehäuses 8 bildet. Das jeweilige Spiel a zwischen den Anschlag-bzw. Begrenzungs-Flächen ist im vorliegenden Beispiel zu jeweils 0,5 mm gewählt, so daß das Gehäuse 8 insgesamt um 1 mm in radialer Richtung X beweglich ist.

Wie Figur 3 weiter zeigt, ist die Aufnahme 2 in der weiteren zu den Gehäuse-Längsachsen 18, 19 radialen Richtung Y um einen auf die Höhe 30 der Erhebung 4 abgestimmten Betrag 31 größer als die entsprechende Steckverbinder-Gehäuseabmessung 32 bemessen. Dies verleiht dem Gehäuse 8 in der Radialebene X-Y eine erhöhte Beweglichkeit.

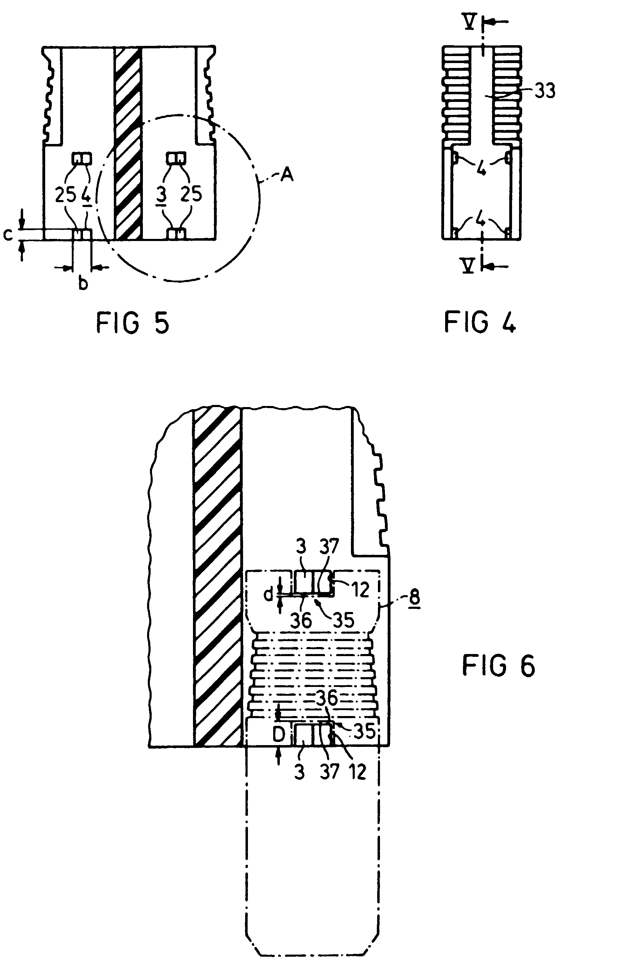

Figur 4 zeigt in Seitenansicht des Halters einen durchgängig verlaufenden seitlichen Schlitz 33, durch den jeweils das Lichtwellenleiterkabel 14 bzw. 15 (Figur 1) einlegbar und entfernbar ist.

Der in Figur 5 gezeigte Schnitt entlang der Linie V-V in Figur 4 verdeutlicht die symmetrische Anordnung der Erhebungen 3, 4 im oberen Bereich des Halters; wie Figur 4 andeutet, ist eine entsprechende symmetrische Anordnung im unteren Bereich vorgesehen. Die Breite b der Erhebungen beträgt inklusive der Schräge 25 2,4 mm, deren axiale Erstreckung c beträgt 1,5 mm. Demgegenüber beträgt die entsprechende Breite B (Figur 3) der korrespondierenden Ausnehmung 2,9 mm.

Figur 6 zeigt zur weiteren Verdeutlichung der Lage des (strichpunktiert dargestellten) Steckverbinder-Gehäuses 8 und dessen Beweglichkeit in radialer Richtung X (Figur 1) eine vergrößerte Ansicht des Bereichs A des Halters gemäß Figur 5. Im Bereich 35 der korrespondierenden Radialflächen 36 der Erhebungen 3 mit entsprechenden Flächen 37 des Gehäuses 8 besteht jeweils ein Zwischenraum d von 0,1 mm (aufgrund der korrespondierenden axialen Länge D der Ausnehmung 12 von 1,6 mm), so daß vorzugsweise auch in axialer Richtung Z (Figur 1) eine geringe Beweglichkeit des Gehäuses ermöglicht und damit beim Einstecken ein Verkanten in Z-X-Ebene erschwert wird.

Die erfindungsgemäße Anordnung ist robust und konstruktiv besonders einfach aufgebaut und läßt sich beim Steckvorgang leicht handhaben, ohne daß durch die Handhabung die Beweglichkeit der Steckverbinder-Gehäuse behindert werden kann. Obwohl eine relative Beweglichkeit der Steckverbinder-Gehäuse zueinander bereits durch die bewegliche Lagerung eines der Steckverbinder-Gehäuse erreicht ist, ist zur Erfüllung vorliegender Normen bzw. Normentwürfe (z.B. ANSI X3T9) eine Beweglichkeit beider bzw. (bei mehr als zwei Steckverbinder-Gehäusen) aller Steckverbinder-Gehäuse besonders vorteilhaft.

## Patentansprüche

1. Verbinderanordnung enthaltend zwei einzelne optische Steckverbinder-Gehäuse (7,8) und einen Halter mit zwei im wesentlichen starr miteinander verbundenen Aufnahmen (1,2) mit jeweils einem im wesentlichen C-förmigen Querschnitt für je eines der Steckverbinder-Gehäuse (7,8),
- wobei die Aufnahmen (1,2) innenseitig jeweils Haltemittel (3,4) zur Zusammenwirkung mit komplementären Haltemitteln (11,12) der Steckverbinder-Gehäuse (7,8) aufweisen,
- wobei zumindest eine Aufnahme (2) innenseitig und deren Haltemittel (4) in bezug auf die Außenabmessung (20) des jeweiligen Steckverbinder-Gehauses (8) und dessen komplementäre Haltemittel (12) so bemessen sind, daß dieses Gehäuse (8) in dieser Aufnahme (2) in wenigstens einer zu seiner Längsachse (19) radialen Richtung (X) beweglich haltbar ist, und
- wobei die Schenkel des C-förmigen Querschnitts derart elastisch verformbar sind, daß sie beim Einbringen des jeweiligen Steckverbinder-Gehäuses (7,8) auffedern und bei vollständig eingebrachtem Gehäuse (7,8) zurückfedern, so daß die komplementären Haltemittel (3,11; 4,12) in Zusammenwirkung kommen.

2. Anordnung nach Anspruch 1,
**dadurch gekennzeichnet,**
daß die Haltemittel des Halters mindestens eine Erhebung (3,4) und/oder eine Ausnehmung umfassen, die mit korrespondierenden Ausnehmungen (11,12) und/oder Erhebungen an den Außenflächen (9, 10) der Steckverbinder-Gehäuse (7,8) zusammenwirken.

3. Anordnung nach Anspruch 2,
**dadurch gekennzeichnet,**
daß die Erhebungen (3,4) der Aufnahmen (1,2) eine der offenen Seite (6) zugewandte schräge Fläche (25) haben.

4. Anordnung nach Anspruch 2 oder 3,
**dadurch gekennzeichnet,**
daß zumindest eine Erhebung (4) der Aufnahme (2) eine der offenen Seite (6) abgewandte Anschlagfläche (28) für eine Begrenzungsfläche (29) der korrespondierenden Ausnehmung (12) aufweist.

5. Anordnung nach einem der vorangehenden Ansprüche,
**dadurch gekennzeichnet,**
daß die Aufnahmen (1,2) annähernd spiegelsymmetrisch um einen gemeinsamen Mittelsteg (5) ausgebildet sind und daß der Mittelsteg (5) einen Anschlag zur Begrenzung der jeweiligen Radialbewegung der Steckverbinder-Gehäuse (7,8) bildet.

6. Anordnung nach einem der Ansprüche 2 bis 5,
**dadurch gekennzeichnet,**
daß zumindest die eine Aufnahme (1,2) in einer weiteren radialen Richtung (4) um einen auf die Höhe (30) der jeweiligen Erhebung (4) abgestimmten Betrag (31) größer als die entsprechende Außenabmessung (32) des Steckverbinder-Gehäuses (8) bemessen ist.

7. Anordnung nach einem der Ansprüche 2 bis 6,
**dadurch gekennzeichnet,**
daß die Ausnehmungen (11,12) in Richtung der Längsachsen (18,19) der Steckverbinder-Gehäuse (7,8) größer als die korrespondierenden Erhebungen (3,4) bemessen sind.

## Claims

1. Connector arrangement containing two individual optical plug-in connector housings (7, 8) and a holder having two receivers (1, 2) which are substantially rigidly connected to each other and have in each case a substantially C-shaped cross-section, for each one of the plug-in connector housings (7, 8),
- with the receivers (1, 2) having on the inside in each case holding means (3, 4) for cooperation with complementary holding means (11, 12) of the plug-in connector housings (7, 8),
- with at least one receiver (2) on the inside and its holding means (4) being dimensioned with respect to the external dimensions (20) of the respective plug-in connector housing (8) and its complementary holding means (12) in such a way that this housing (8) can be held in this receiver (2) in a manner such that it is movable in at least one direction (X) which is radial with respect to its longitudinal axis (19), and
- with the limbs of the C-shaped cross-section being elastically deformable in such a way that they spring up during insertion of the respective plug-in connector housing (7, 8) and spring back when the housing (7, 8) is fully inserted, so that the complementary holding means (3, 11; 4, 12) come into cooperation.

2. Arrangement according to claim 1,
characterised in that the holding means of the holder comprise at least one bump (3, 4) and/or a recess, which cooperate with corresponding recesses (11, 12) and/or bumps on the outside surfaces (9, 10) of the plug-in connector housings (7, 8).

3. Arrangement according to claim 2,
characterised in that the bumps (3, 4) of the receivers 5 (1, 2) have a sloping surface (25) which faces the open side (6).

4. Arrangement according to claim 2 or 3,
characterised in that at least one bump (4) of the receiver (2) has a stop face (28), which faces away from the open side (6), for a delimiting surface (29) of the corresponding recess (12).

5. Arrangement according to one of the preceding claims, characterised in that the receivers (1, 2) are constructed such that they are approximately mirror-symmetrical about a common centre web (5), and in that the centre web (5) forms a limit stop for delimiting the respective radial movement of the plug-in connector housings (7, 8).

6. Arrangement according to one of the claims 2 to 5, characterised in that at least the one receiver (1, 2) is dimensioned such that in a further radial direction (4) (sic) it is larger than the corresponding external dimensions (32) of the plug-in connector housing (8) by an amount (31) which is matched to the height (30) of the respective bump (4).

7. Arrangement according to one of the claims 2 to 6, characterised in that the recesses (11, 12) are dimensioned such that in the direction of the longitudinal axes (18, 19) of the plug-in connector housings (7, 8) they are larger than the corresponding bumps (3, 4).

## Revendications

1. Dispositif de connexion comportant deux boîtiers individuels (7, 8) de connecteurs optiques à enfichage et un élément de retenue ayant deux logements (1, 2), qui sont sensiblement reliés rigidement entre eux, qui ont chacun une section transversale ayant sensiblement la forme d'un C, et qui sont destinés chacun à un boîtier (7, 8) de connecteur à enfichage,
- les logements (1, 2) comportant des moyens (3, 4) de retenue intérieurs qui sont destinés à coopérer avec des moyens (11, 12) de retenue complémentaires des boîtiers (7, 8) de connecteurs à enfichage,
- l'intérieur d'au moins un logement (2), et ses moyens (4) de retenue, étant dimensionnés par rapport à la dimension extérieure (20) du boîtier (8) respectif de connecteur à enfichage et de ses moyens (12) de retenue complémentaires, de telle sorte que ce boîtier (8) puisse être retenu dans ce logement (2) de façon à être mobile dans au moins une direction radiale (X) par rapport à son axe longitudinal (19), et
- les branches de la section transversale en forme de C pouvant être déformées élastiquement telle sorte qu'elles s'écartent élastiquement lors de l'insertion de chaque boîtier (7, 8) de connecteur à enfichage, et qu'elles se resserrent élastiquement après l'insertion complète du boîtier (7, 8), de sorte que les moyens de retenue (3, 11 ; 4, 12) complémentaires puissent coopèrer.

2. Dispositif selon la revendication 1,
caractérisé par le fait que
les moyens de retenue de l'élément de retenue comportent au moins une surélévation (3, 4) et/ou un évidement qui coopèrent avec des évidements (11, 12) et/ou des surélévations correspondants des surfaces extérieures (9, 10) des boîtiers (7, 8) de connecteurs à enfichage.

3. Dispositif selon la revendication 2,
caractérisé par le fait que
les surélévations (3, 4) des logements (1, 2) comportent une surface inclinée (25) orientée en direction du côté ouvert (6).

4. Dispositif selon la revendication 2 ou 3,
caractérisé par le fait que
au moins une surélévation (4) du logement (2) comporte une surface de butée (28) éloignée du côté ouvert (6), qui est destinée à une surface de délimitation (29) de l'évidement (12) correspondant.

5. Dispositif selon l'une quelconque des revendications précédentes,
caractérisé par le fait que
les logements (1, 2) sont formés approximativement symétriquement autour d'une barrette médiane (5) commune, et que la barrette médiane (5) forme une butée pour limiter le mouvement radial respectif des boîtiers (7, 8) de connecteurs à enfichage.

6. Dispositif selon l'une quelconque des revendications 2 à 5,
caractérisé par le fait que
dans une autre direction radiale (4), au moins un des logements (1, 2) est dimensionné afin d'être plus grand que la dimension extérieure (32) correspondante du boîtier (8) de connecteur à enfichage, d'une valeur (31) adaptée à la hauteur (30) de la surélévation (4) respective.

7. Dispositif selon l'une quelconque des revendications 2 à 6,
caractérisé par le fait que
en direction des axes longitudinaux (18, 19) des boîtiers (7, 8) de connecteurs à enfichage, les évidements (11, 12) sont dimensionnés afin d'être plus grands que les surélévations (3, 4) correspondantes.
